# EUROPÄISCHE PATENTSCHRIFT

(11) **EP 1 467 909 B1**
(45) Veröffentlichungstag und Bekanntmachung des Hinweises auf die Patenterteilung: **23.08.2006**
(21) Anmeldenummer: 03706233.8
(22) Anmeldetag: 20.01.2003
(51) Int. Cl.: B64C 9/00

(54) **GELENK ZUR VERBINDUNG VON BAUTEILEN MIT EINANDER ZUGEWANDTEN LÄNGSSEITEN SOWIE EIN FLEXIBLES BAND ZUR VERWENDUNG FÜR EIN DERARTIGES GELENK**
JOINT FOR CONNECTING COMPONENTS TOGETHER ON OPPOSITE LONGITUDINAL SIDES IN ADDITION TO A FLEXIBLE STRIP USED FOR SAID JOINT
ARTICULATION CON UE POUR RELIER DES COMPOSANTS PRESENTANT DES COTES LONGITUDINAUX OPPOSES ET BANDE FLEXIBLE DESTINEE A ETRE UTILISEE DANS UNE TELLE ARTICULATION

(30) Priorität: 22.01.2002 DE 10202439
(43) Veröffentlichungstag der Anmeldung: 20.10.2004
(73) Patentinhaber: Airbus Deutschland GmbH, 21129 Hamburg (DE)
(72) Erfinder: PEREZ-SANCHEZ, Juan, 83620 Feldkirchen-Westerham (DE)
(74) Vertreter: Hansmann, Dierk
(86) Internationale Anmeldenummer: PCT/DE2003/000142
(87) Internationale Veröffentlichungsnummer: WO 2003/062052

(56) Entgegenhaltungen:
- EP-A- 1 085 152
- DE-C- 4 037 774
- GB-A- 2 184 281
- US-A- 4 843 679
- US-A- 5 354 589

## Beschreibung

Die Erfindung betrifft ein Gelenk zur Verbindung zueinander beweglicher Bauteile an jeweiligen Längsseiten mit zumindest zwei zusammenwirkenden Gelenk-Bändern.

Zur Verbesserung der aerodynamischen Eigenschaften von Flügeln sind aus dem Stand der Technik für Flügel mit variablen und über Steuermechanismen einstellbarem Profil bekannt. Diese Konzepte verwenden jedoch verhältnismäßig viele bewegliche Teile und Gelenke, die einen hohen Aufwand in Bezug auf ihre Herstellung und Montage bedeuten.

Beispielsweise offenbart die US 4 349 169 einen Tragflügel mit einem mittels einem Stellantriebs veränderlichen Profil. Antriebsstangen des Stellantriebs sind mittels Gelenken mit der Struktur des Tragflügels verbunden, wobei die Achsrichtung der Gelenke in Spannweitenrichtung verläuft. Dadurch ist zwar eine Profilveränderung möglich, wenn in Spannweiten-Richtung gesehen mehrere Stellantriebe mit entsprechenden Betätigungsstangen hintereinander angeordnet sind. Die dort offenbarte Profilform-Veränderung erfolgt jedoch bei diesem Gegenstand über die gesamte Spannweiten-Richtung.

Weiterhin ist aus der EP 860 355 ein aerodynamisches Bauteil mit veränderbarer Wölbung bekannt, das aus gelenkig gelagerten Rippen mit einem Außengürtel und mehreren an diesem angreifenden längenkonstanten Versteifungsstreben gebildet ist. Die Versteifungsstreben werden zur Verformung des Bauteils mittels Aktuatoren derartig betätigt, dass sich die Versteifungsstreben in der Rippenlängsrichtung oder Strömungsrichtung bewegen.

1Aus der DE 28 07 648 C2 ist eine Faltwand mit durch ein Stoffgelenk miteinander verbundenen Wandteilen bekannt. Das Stoffgelenk ist ein Band, das an seinen Längskanten mit einer Randrippe versehen ist. Die Randrippe wird in einer längs der Stirnseite des Wandteils verlaufenden Nut mit einer entsprechenden, gegenüber der Nut breiteren Ausnehmung gehalten.

Die EP 1 085 152 A2 beschreibt ein Gelenk zur Verbindung zueinander beweglicher Bauteile an jeweiligen Längsseiten, wobei grundsätzlich ein im wesentlichen in der Symmetrieebene der miteinander zu verbindenden beweglichen Bauteile liegendes flexibles Bandmaterial vorgesehen ist, durch welches die beiden zueinander beweglichen Bauteile um eine sich zwischen diesen und parallel zu deren Längsseiten erstreckende Gelenkachse beweglich sind. Zusätzlich zu diesem in der Ebene liegenden Bandmaterial können gemäß weiteren dort beschriebenen Ausführungsbeispielen zusammenwirkende Gelenkbänder vorgesehen sein, die mit ihren ersten Enden jeweils an zueinander entgegengesetzt orientierten Seiten des ersten Bauteils und mit ihren zweiten Enden jeweils an zueinander entgegengesetzt sowie entgegengesetzt zu den jeweiligen Seiten des ersten Bauteils orientierten Seiten des zweiten Bauteils befestigt sind. Durch die zusätzlichen, von der einen Seite des einen Bauteils zur anderen Seite des anderen Bauteils geführten Gelenk-Bänder soll eine höhere Festigkeit bei gleichzeitig geringem Gewicht erreicht werden. Dies wird als eine alternative Maßnahme zu beispielsweise anderen vorgeschlagenen Maßnahmen angesehen, wo zur besseren Führung der beiden zueinander beweglichen Bauteile ein mechanisches Lager vorgesehen ist, welches eine in dem Gelenk enthaltene Welle trägt. Das in der Ebene liegende Gewebeband ist nicht geeignet Druckkräfte aufzunehmen, sondern es tritt eine Versetzung quer zur Ebene des Gewebematerials auf, die im wesentlichen den Abstand zwischen den beiden zueinander beweglichen Bauteilen entspricht.

Aus der US 4 843 679 ist ein Gelenk zur Verbindung zueinander beweglicher Bauteile an jeweiligen Längsseiten bekannt, bei dem zumindest zwei zusammenwirkende Gelenk-Bänder vorgesehen sind, die mit ihren ersten Enden jeweils an zueinander entgegengesetzt orientierten Seiten des ersten Bauteils und mit ihren zweiten Ende jeweils an zueinander entgegengesetzt sowie entgegengesetzt zu den jeweiligen Seiten des ersten Bauteils orientierten Seiten des zweiten Bauteils befestigt sind. Ein solches Gelenk wird hier im Oberbegriff der unabhängigen Ansprüche als nächster Stand der Technik als bekannt vorausgesetzt. Bei dem bekannten Gelenk verlaufen die Gelenk-Bänder jeweils alle im rechten Winkel zur Achse des Gelenks.

Auch aus der RU 2081788 C ist ein Gelenk zur Verbindung zueinander beweglicher Bauteile an jeweiligen Längsseiten bekannt, nämlich einer aerodynamisch wirksamen Klappe an einem Flügel, bei dem zumindest zwei zusammenwirkende Gelenk-Bänder vorgesehen sind, die mit ihren ersten Enden jeweils an zueinander entgegengesetzt orientierten Seiten des ersten Bauteils und mit ihren zweiten Ende jeweils an zueinander entgegengesetzt sowie entgegengesetzt zu den jeweiligen Seiten des ersten Bauteils orientierten Seiten des zweiten Bauteils befestigt sind.

Aus der DE 40 37 774 C1 ist eine Anordnung zum gelenkigen Verbinden eines beweglichen Strömungsführungselements mit einem Stützelement bekannt, wobei die beiden zueinander beweglichen Bauteile mittels eines über Kreuz geführten Fadens oder Seils gelenkig miteinander verbunden und durch ein Füllstück aus einem weichen und elastischen Material so miteinander verbunden sind, dass das Füllstück die Stromführungsfläche der beiden gelenkig verbundenen Teile ergänzt.

Aus der US 5 354 589 ist ein Gelenkmechanismus bekannt, bei dem zwei zueinander bewegliche Bauteile mittels eines bandförmigen Gewebematerials miteinander verbunden sind, welches zwei Schleifen in Form einer Acht bildet. Zwar ist hier ein schräger Verlauf des Bandes zu den miteinander verbindenden beweglichen Bauteilen erkennbar, wobei jeses Band bei seinem Verlauf von der einen Seite des ersten Bauteils zur anderen Seite des zweiten Bauteils einen Knick macht, wasaber zu einer Schwächung und einer Ungenauigkeit in der Verbindung führt.

Schließlich ist aus der GB 2 184 281 A ein Gelenkmechanismus bekannt, bei welchem federnd elastische Klipse von der einen Seite des einen Bauteils zu der anderen Seite des anderen Bauteils im rechten Winkel zu den miteinander verbindenden Bauteilen, verlaufen.

Die Aufgabe der Erfindung ist es, ein verbessertes Gelenk zur Verbindung zueinander beweglicher Bauteile an jeweiligen Längsseiten mit zumindest zwei zusammenwirkenden Gelenk-Bändern zu schaffen, welches eine erhöhte Stabilität aufweist.

Diese Aufgabe wird gelöst durch ein Gelenk mit den Merkmalen des Anspruchs 1.

Gemäß der Erfindung wird ein Gelenk zu Verbindung zueinander beweglicher Bauteile an jeweiligen Längsseiten mit zumindest zwei zusammenwirkenden Gelenk-Bändern, die mit ihren ersten Enden jeweils an zueinander entgegengesetzt orientierten Seiten des ersten Bauteils und mit ihren zweiten Enden jeweils an zueinander entgegengesetzt sowie entgegengesetzt zu den jeweiligen Seiten des ersten Bauteils orientierten Seiten des zweiten Bauteils befestigt sind, geschaffen. Erfindungsgemäß ist es vorgesehen, dass zwischen den einander zugewandten Seiten der Bauteile zumindest ein Druck-Element angeordnet ist.

Vorteilhafte Ausführungsformen und Weiterbildungen des erfindungsgemäßen Gelenks sind in den Unteransprüchen angegeben.

Im folgenden werden Ausführungsbeispiele der Erfindung anhand der Zeichnung beschrieben.

Es zeigt:
- Fig. 1: eine schematische Darstellung einer Ausführungsform des erfindungsgemäßen Gelenks in einer Draufsicht, in der in einer Pfeil-Darstellung die Kinetik und Kinematik eingetragen ist,
- Fig. 2: die Ausführungsform des Gelenks nach der Fig. 1 im Schnitt mit einer Pfeil-Darstellung der Kinetik und Kinematik,
- Fig. 3a: eine schematische Darstellung des Schubkraft-Verlaufs bei der Verwendung flexiblen Bandes für ein Gelenk, das erfindungsgemäß nicht fixiert, sondern z.B. als Gewebe aufgebaut ist,
- Fig. 3b: eine schematische Darstellung des Schubkraft-Verlaufs bei der Verwendung flexiblen Bandes für ein Gelenk, das in einer Matrix, also z.B. in einer Harz-Schicht, fixiert ist,
- Fig. 4: eine perspektivische Darstellung der Ausführungsform des erfindungsgemäßen Gelenks nach der Fig. 1,
- Fig. 5: eine Draufsicht der Ausführungsform des erfindungsgemäßen Gelenks nach der Fig. 4,
- Fig. 6: einen Längsschnitt durch die Ausführungsform des erfindungsgemäßen Gelenks nach der Fig. 4 und
- Fig. 7: einen Längsschnitt durch eine weitere Ausführungsform des erfindungsgemäßen Gelenks mit einem Spann-Element zur Fixierung eines flexiblen Gelenk-Bandes.

Für die erfindungsgemäßen Gelenke zur gelenkigen Verbindung zweier zueinander beweglicher Bauteile werden flexible Gelenk-Bänder oder Bänder oder flexible Riemen oder Gürtel-Elemente verwendet, die aus zumindest zwei Schichten oder Lagen eines Materials aufgebaut sind, wobei die Schichten oder Lagen im freien Gelenk-Bereich F miteinander nicht fixiert sind. Als der freie Gelenk-Bereich FG wird nachfolgend derjenige Bereich verstanden, der zwischen den miteinander verbundenen Bauteilen liegt, d.h. von diesen zumindest zur Herstellung von deren Beweglichkeit freigelassen wird. Der freie Gelenk-Bereich FG ist auch derjenige Bereich der Bänder, an dem die Bänder des Gelenks nicht in jeder der vorgegebenen Stellungen der Bauteile an diesen anliegen. Demgegenüber weist jedes erfindungsgemäß vorgesehenes flexibles Band einen fixierten Bereich B auf, an dem das Band an dem jeweiligen Bauteil befestigt oder mit diesem fest verbunden ist. An diesen Bändern können auch Bereiche enthalten sein, die zwar an dem Bauteil oder den Bauteilen anliegen, die jedoch nicht fixiert oder an diesen befestigt sind.

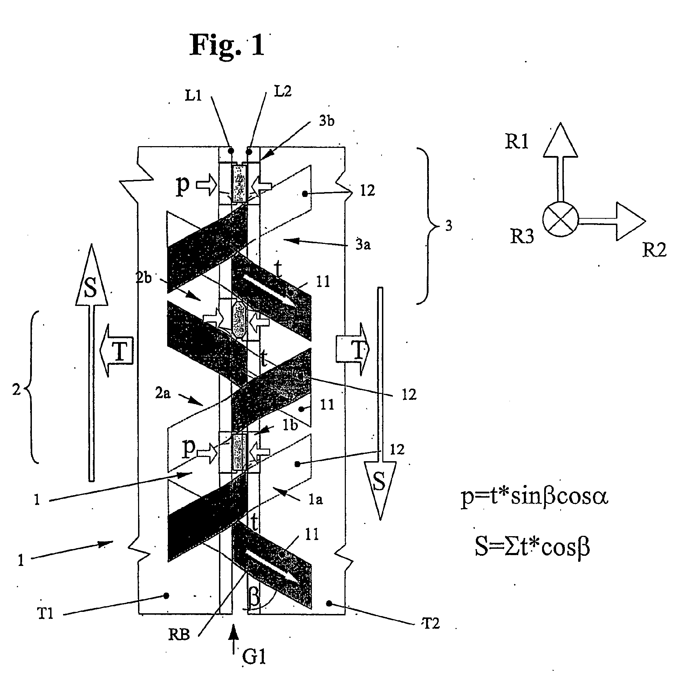

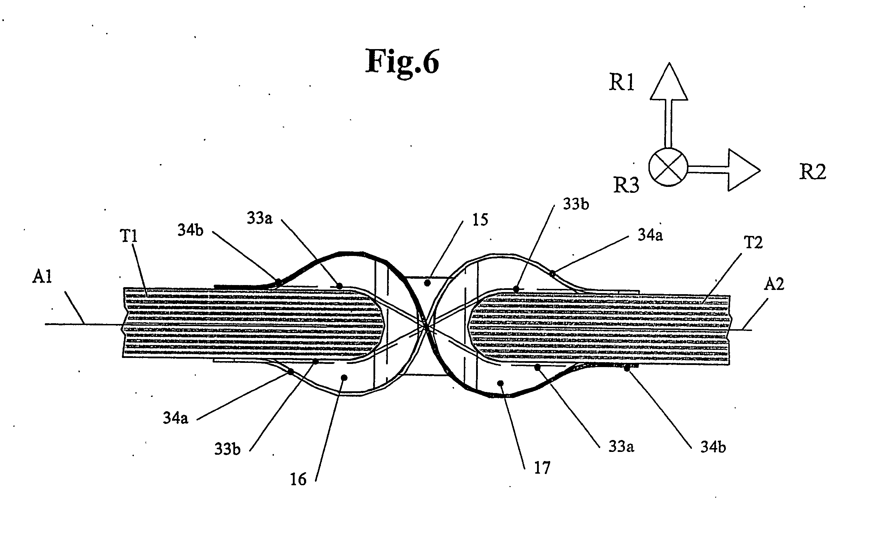

Bei der Ausführungsform der Gelenke oder Anordnungen aus solchen nach den Fig. 1, 2 sowie 4, 5 und 6 sind die durch das Struktur-Gelenk miteinander gelenkig verbundenen Bauteile T1, T2 in Bezug auf ihre Quer-Richtung R2 hintereinander oder an entsprechenden Längsseiten L1, L2 angeordnet, d.h. jedes Bauteil liegt jeweils in der Verlängerung des über das Gelenk mit diesem verbundenen Bauteils. Es handelt sich also um ein Gelenk zur Verbindung von Bauteilen, deren Längsseiten einander zugewandt sind, so dass die Bauteile an Randbereichen oder Enden über das Gelenk miteinander verbunden sind. Dabei kann ein erstes Bauteil T1 und ein zweites Bauteil T2 auch über ein Gelenk G1 aus mehreren erfindungsgemäßen funktions- und baugleichen Gelenk-Teilen 1, 2, 3 miteinander verbunden werden. Nach der Ausführungsform der Figur 1 stellt jedes Gelenk-Teil 1, 2, 3 ein erfindungsgemäßes Gelenk dar. Die Längs-Richtung der Bauteile, der auch die Achsen-Richtung der beschriebenen Gelenke oder die Längsrichtung des freien Gelenk-Bereichs FG entspricht, wird im folgenden mit dem Bezugszeichen R1, deren Quer-Richtung mit dem Bezugszeichen R2 und deren Dicken-Richtung mit dem Bezugszeichen R3 bezeichnet.

Jedes Gelenk bzw. jeder Gelenk-Teil 1, 2, 3 weist zumindest eine Anordnung 1a; 2a bzw. 3a aus zumindest zwei flexiblen Bändern sowie zumindest ein Anlage- oder Druck-Element 1b, 2b bzw. 3b zur Aufnahme eines durch die Bauteile aufgrund äußerer Kräfte S, T, Q und gegebenenfalls der durch die Bänder ausgeübten Zugkraft ausgeübten Druckes p auf. Das Druck-Element dient auch zur Beabstandung der gelenkig verbundenen Bauteile.

Das erfindungsgemäße Gelenk ist ein Struktur-Gelenk, da es in seinen Bestandteilen aus Materialien gebildet werden kann, die ähnliche Eigenschaften wie die mit diesem verbundenen Bauteile aufweisen, so dass das Verhalten des Gelenks selbst bei Einwirkung von Kräften bzw. unter Spannungen dem Verhalten der Bauteile entspricht.

Im folgenden wird das in der Fig. 1 dargestellte Struktur-Gelenk G1 mit den Teilen 1, 2, 3 unter besonderer Bezugnahme auf das Gelenk 1 beschrieben. Die Bauteile sind in ihrer Neutral-Position in einem Winkel von 180 Grad zueinander angeordnet. Erfindungsgemäß kann der Winkel jedoch auch ungleich 180 Grad sein.

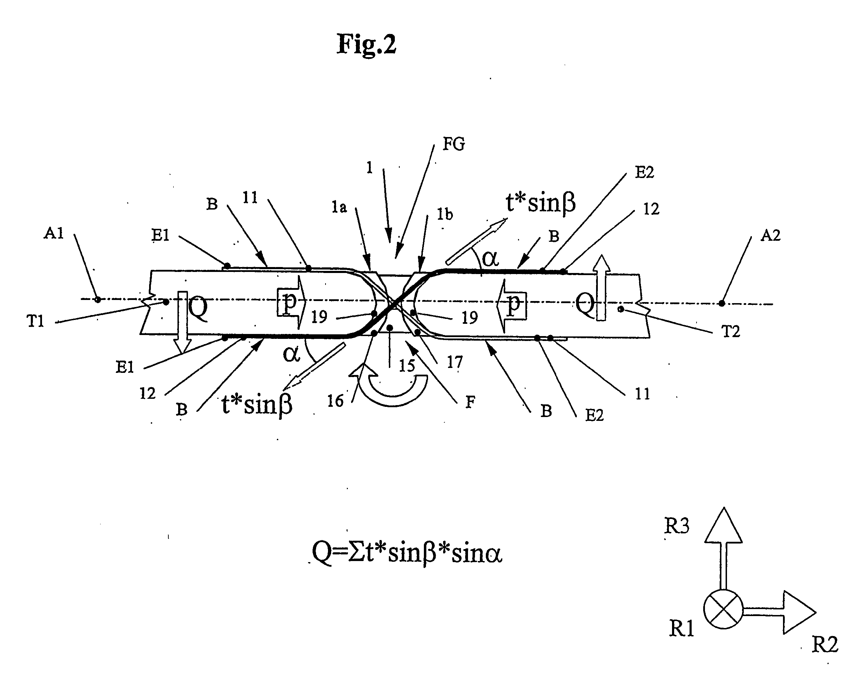

Die Anordnung 1a aus zumindest zwei Bändern 11, 12 ist im freien Gelenk-Bereich FG in Bezug auf die Achsen-Richtung R1 versetzt angeordnet zu dem zumindest einen zugehörigen Druck-Element 1b. Auch kann ein Druck-Element oder können mehrere Druck-Elemente zwischen zwei Bändern angeordnet sein. Die Bänder sind in einer vorgegebenen Vorspannung an den Bauteilen T1 und T2 befestigt, um eine Führung der Bauteile bei gleichzeitiger Beabstandung derselben zu erreichen. Die Bänder verlaufen in ihrer Längs-Richtung RB allgemein in einem Winkel β zur Längs-Richtung R2 des Bauteils T1, T2 bzw. zur Senkrechten auf den Verlauf der Gelenk-Achse R1. Der Winkel β kann zwischen 0 Grad und fast 90 Grad liegen, wobei der Winkel β von den durch das Gelenk zu übertragenden Kräften bestimmt ist. Das Druck-Element 1b bewirkt eine vorgegebene Beabstandung der Bauteile T1 und T2, wodurch die an den Seitenflächen der Bauteile T1, T2 angebrachten Bänder 11, 12 im freien Gelenk-Bereich FG in einem vorgegebenen Winkel α zur Quer-Richtung R2 der Bauteile T1, T2 verlaufen. Die sich aus den Winkeln α und β ergebenden Zusammenhänge zwischen den äußeren Kräften und der in den Bändern wirkenden Zugkräften t bzw. dem Druck p sind in den Fig. 1 und 2 zusätzlich eingetragen. Dabei wird vereinfachend angenommen, dass in jedem beteiligten Band dieselbe Zugkraft t wirkt.

Erfindungsgemäß ist ein Gelenk oder Struktur-Gelenk zur Verbindung zueinander beweglicher Bauteile T1, T2 an jeweiligen Längsseiten L1, L2 mit zumindest zwei zusammenwirkenden Bändern vorgesehen, die mit ihren ersten Enden E1 jeweils an zueinander entgegengesetzt orientierten Seiten des ersten Bauteils T1 und mit ihren zweiten Enden E2 jeweils an zueinander entgegengesetzt sowie entgegengesetzt zu den jeweiligen Seiten des ersten Bauteils orientierten Seiten des zweiten Bauteils T2 befestigt sind, so dass deren Verläufe in Bezug auf die Mittelachsen A1, A2 der Bauteile entgegengesetzt zueinander verlaufen oder dass diese im Bereich zwischen den Bauteilen die Längs-Mittelachse eines der Bauteile in entgegengesetzten Richtungen schneiden, mit zumindest einem zwischen den Längsseiten angeordneten Druck-Element zur Führung und Beabstandung der Bauteile, wobei die in der Achsen-Richtung R1 gesehen hintereinander liegenden Bänder im Bereich FG zwischen den Bauteilen T1, T2 in der Achsen-Richtung R1 gesehen über Kreuz verlaufen. Insbesondere bilden die Bauteile im Zusammenspiel mit dem zumindest ein Druck-Element seitlich neben diesem einen freien Gelenk-Bereich FG oder zwei freie Gelenk-Bereiche aus, in dem bzw. in denen die Bänder jeweils von einem zum anderen Bauteil verlaufen. Die Bänder können dabei auf einer Seite des Druck-Elementes oder jeweils eines auf beiden Seiten desselben angeordnet sein. Vorzugsweise sind zwei Druck-Elemente vorgesehen, um eine stabile Lagerung der Bauteile T1, T2 zu erreichen.

Das Druck-Element 1b weist zumindest eine Scheibe 15 auf. Entweder an einer entsprechenden Oberfläche 19 der Bauteile oder an den den Längsseiten L1, L2 zugewandten Seiten des Druck-Elements 15 kann jeweils zumindest ein Auflage-Element 16 bzw. 17 angeordnet sein, so dass jedes Auflage-Element zwischen dem Druck-Element 1b und dem jeweiligen Bauteil T1, T2 gelegen ist. Ein Auflage-Element 16, 17 kann insbesondere eine Gleitschicht aufweisen, die an derjenigen Oberfläche 19 des Auflage-Elementes gelegen ist, die dem jeweiligen Bauteil T1, T2 zugewandt ist. Das Druck-Element und gegebenenfalls das Auflage-Element oder die Auflage-Elemente wird bzw. werden durch die Spannung der Bänder zwischen den Bauteilen T1 und T2 gehalten.

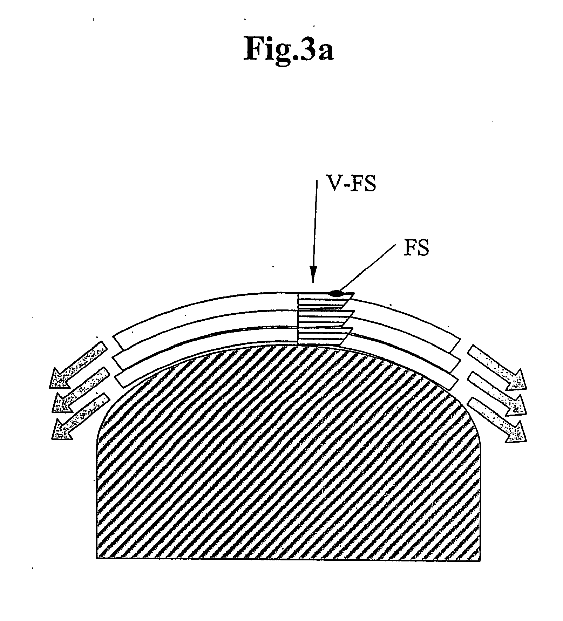

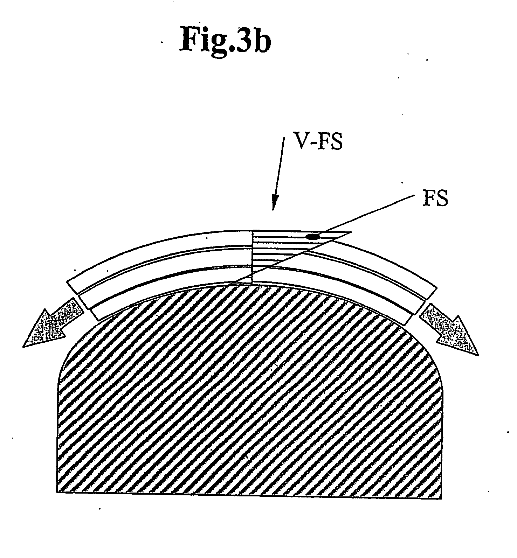

Als Material für die erfindungsgemäß verwendeten Bänder ist insbesondere ein Faserverbund (FV) -Werkstoff oder ein anderer Kunststoff oder ein textiles Material oder Gewebe vorgesehen. Die vorgesehenen Bänder sind aus zumindest zwei Lagen des voranstehend bezeichneten Materials gebildet. Die Lagen sind im Bereich F, also im Bereich zwischen den mit dem Gelenk zu verbindenden Bauteilen T1, T2, nicht aneinander fixiert, um die Schubkräfte FS des sich ergebenden Schubkraft-Verlaufs V-FS möglichst gering zu halten (Fig. 3a). Andernfalls würde sich ein ungünstiger Verlauf von Schubkräften FS ergeben (Fig. 3b).

Die Fixierung oder Befestigung der Bänder an dem jeweiligen Bauteil T1, T2 bei deren Anordnung nach den Fig. 1,2 und 4, 5, 6 kann nach dem Stand der Technik erfolgen, also z.B. durch Kleben, durch Befestigungs-Elemente oder durch eine Verschmelzung der Materialien des jeweiligen Bandes mit dem jeweiligen Bauteil. Die Fixierung oder Befestigung der Bänder kann zusätzlich oder alternativ auch mittels Spann-Elementen erfolgen.

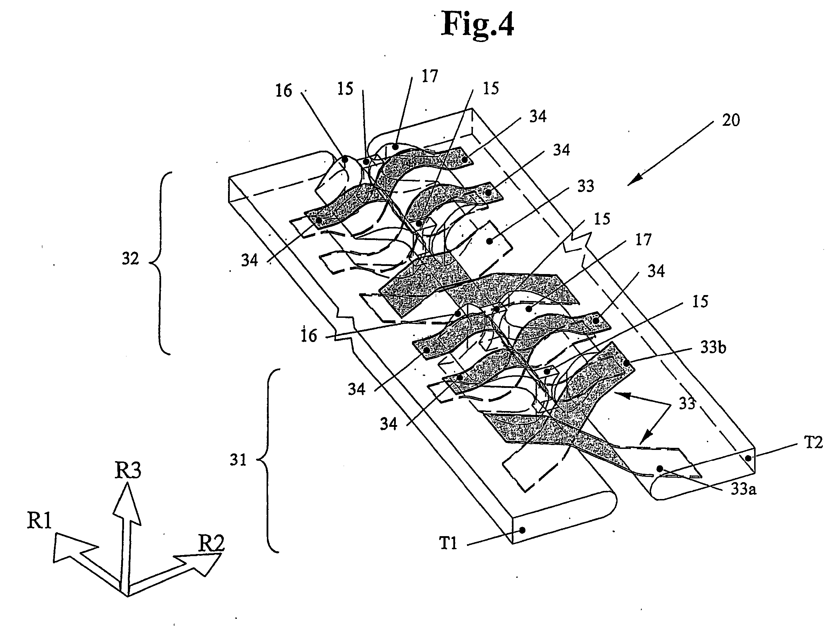

Die Fig. 4 zeigt eine Anordnung 20 aus mehreren erfindungsgemäßen Struktur-Gelenken 31 und 32, die auch als ein einzelnes erfindungsgemäßes Gelenk angesehen werden können, wobei verdeckte Linien gestrichelt und sichtbare Bereiche der Bänder grau gezeichnet sind. Die Gelenke 31 und 32 weisen Bänder 33 bzw. 33a, 33b auf, die in einem Winkel β relativ zur Quer-Richtung R2 der Bauteile T1, T2 oder zur Senkrechten auf die Achsen-Richtung R1 angeordnet sind, wobei der Winkel β in der Ausführungsform der Fig. 4 ungleich 0 Grad ist. Weiterhin weisen die Gelenke 31 und 32 jeweils drei Bänder 34 bzw. 34a, 34b, 34c auf, die in der Richtung R2 verlaufen (Winkel β gleich 0). In Richtung R2 gesehen sind neben den Bändern 34 Druck-Elemente 15 mit jeweils zwei Auflage-Elementen 16, 17 angeordnet. Die einander zugewandten Oberflächen der Auflage-Elemente 16, 17 bzw. die entsprechenden Oberflächen der Druck-Elemente 15 weisen größere Krümmungs-Radien auf, als die einander zugewandten Oberflächen der Bauteile T1, T2. Dadurch wird die an den Druck-Elementen oder den Auflage-Elementen auftretenden Druck-Spannungen verringert. Die neben den Druck-Elementen liegenden Bänder 33 ohne die Verwendung von Auflage-Elementen dienen im wesentlichen zur Aufrechterhaltung einer Andrückkraft in den Querrichtungen R2 der Bauteile an die Druck-Elemente 15. In den Bereichen, in denen die Bänder 34 in nachbarlichem Zusammenhang mit Druck-Elementen 15 stehen, dienen auch die Bänder 34 durch ihre entsprechende Vorspannung zusätzlich der Fixierung eines vorgegebenen maximalen Abstandes zwischen den Bauteilen.

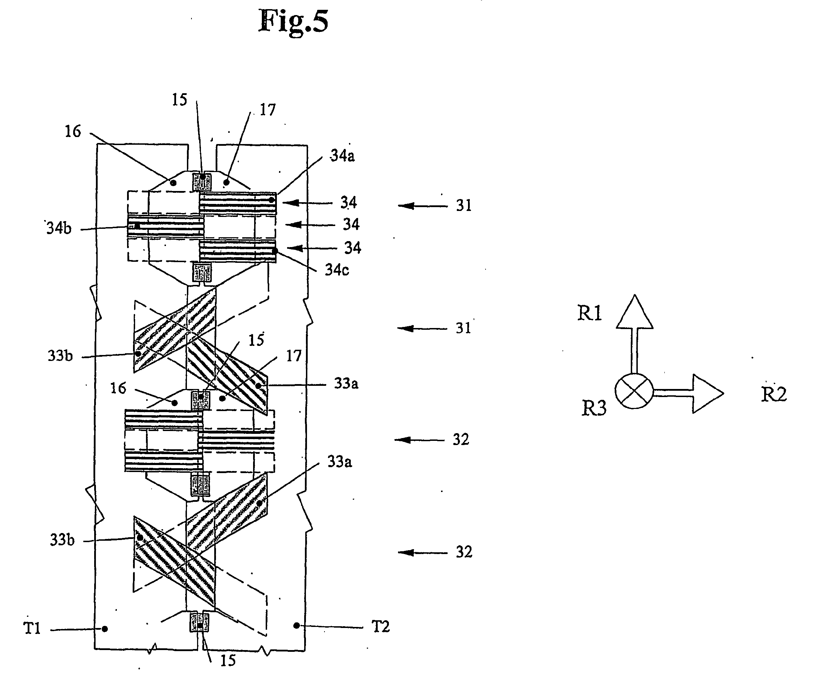

Bei Ausführungsformen des Struktur-Gelenks bzw. einer Anordnung derselben zur Verbindung zweier Bauteile T1, T2 kann auch nur ein Gelenk 31 oder 32 verwendet werden, wie es in den Fig. 4 und 5 dargestellt ist. Bei jedem Gelenk 31, 32 können die Bänder 33 ohne die Verwendung von Auflage-Elementen auch in einem Winkel β gleich 0 angeordnet sein. Alternativ können diese jedoch auch fehlen. Die Bänder 34 mit der Verwendung von Auflage-Elementen können auch in einem Winkel β ungleich 0 angeordnet sein, wobei auch nur jeweils zwei Bänder 34 je Anordnung vorgesehen sein können. Wesentlich ist, dass bei dem erfindungsgemäßen Struktur-Element zumindest zwei Bänder im Zusammenhang zumindest mit einem Druck-Element angeordnet sind. Die den Bauteilen zugewandten Seiten des Druck-Elementes kann durch Verwendung von Auflage-Elementen einen größeren Krümmungsradius aufweisen als die entsprechenden Oberflächen der Bauteile, um die auftretenden Druck-Spannungen zu verringern.

Die Fixierung oder Befestigung der Bänder an dem jeweiligen Bauteil T1, T2 bei deren Anordnung nach den Fig. 1,2, 4, 5 oder 6 kann nach dem Stand der Technik erfolgen, also z.B. durch Kleben, durch Befestigungs-Elemente oder durch eine Verschmelzung der Materialien des jeweiligen Bandes mit dem jeweiligen Bauteil.

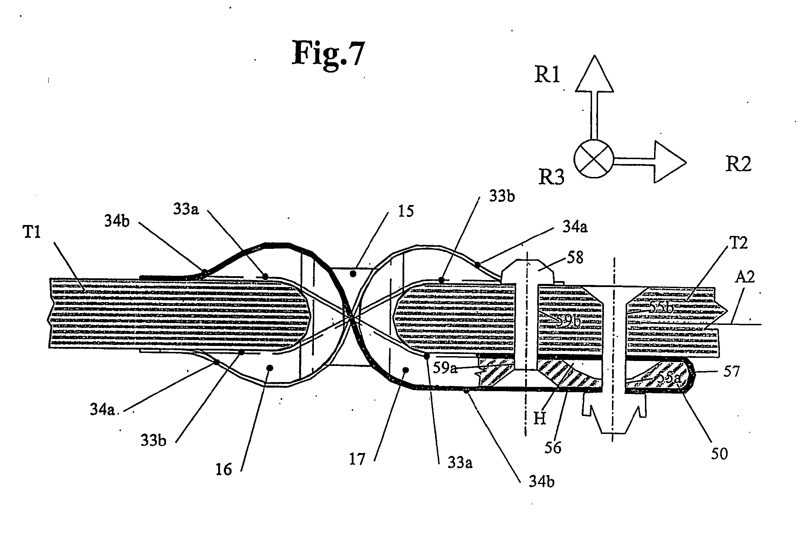

Alternativ oder zusätzlich kann die Befestigung der Bänder an ihrem zweiten Ende E2 am jeweiligen Spann-Element mittels Verbindungs-Elementen. In der Fig. 7 ist eine Befestigung oder Fixierung eines Gelenk-Bandes an einem Spann-Element 50 mittels zumindest eines Verbindungs-Elementes 52 gezeigt, das quer zum Bauteil T2 und der Längsachse A2 des Bauteils T2 oder des Spann-Elementes 50 verläuft und sich durch das Bauteil T2, durch das Spann-Element 50 und dem zwischen diesen gelegenen Abschnitt des Gelenk-Bandes hindurch erstreckt. Das jeweils am Spann-Element befestigte Band erstreckt sich vorzugsweise von der Oberfläche des Spann-Elementes auf der dem Gelenk abgewandten Seite herum und noch in den Bereich zwischen dem Spann-Element und dem jeweiligen Bauteil (in der Fig. 7 das Bauteil T2). Vorzugsweise ist das betreffende Gelenk-Band also von der vom Bauteil T2 abgewandten Außenseite 56 des Spann-Elementes 50 aus um die entgegengesetzt zum Bauteil T1 liegenden Randseite 57 herum bis in den Bereich zwischen dem Spann-Element und dem Bauteil T2 geführt. Das erste Verbindungs-Element 54 erstreckt sich dadurch zum einen durch einen zwischen dem Spann-Element 52 und dem Bauteil T2 gelegenen Bereich des Bandes hindurch. Dazu ist eine entsprechende Bohrung 55a zur Aufnahme des ersten Verbindungs-Elementes 54 im ersten Spann-Element 52a sowie eine Bohrung 55b im Bauteil T2 angeordnet.

Vorzugsweise ist in dem Spann-Element 52 ein Hohlraum H vorgesehen, durch den sich das erste Verbindungs-Element 54 hindurcherstreckt. Ein Ende der Bohrung 55a ist also im Hohlraum H gelegen. Der Hohlraum H ist vorteilhafterweise zum Bauteil T2 hin offen. Durch den Hohlraum H wird das Spann-Element 52 beim Anziehen des ersten Verbindungs-Elementes 54 in der Quer-Richtung R2 des Spann-Elementes 52, also in der Längs-Richtung des Bandes verlängert oder gestreckt, um das betreffende Band zu spannen.

Vorteilhafterweise ist ein zweites Verbindungs-Element 58 nahe des freien Gelenk-Bereichs FG oder nahe des Bauteils T2 vorgesehen. Dieses zweite Verbindungs-Element 58 erstreckt sich -wie das erste Verbindungs-Element 54a- durch das Bauteil T1, durch einen zwischen dem Spann-Element 52 und dem Bauteil T2 gelegenen Bereich des flexiblen Bandes, durch das Spann-Element 52 sowie durch einen auf der Randseite 56 des Spann-Elements 52 gelegenen Bereich des Bandes hindurch. Zur Aufnahme des zweiten Verbindungs-Elementes 58 ist eine entsprechende weitere Bohrung 59a im Spann-Element 52 sowie eine Bohrung 59b im Bauteil T2 angeordnet.

Das Band kann nur auf einer seiner Enden an einem Spann-Element befestigt oder gespannt sein. Die Befestigung oder Fixierung kann auch an beiden Enden eines Bandes erfolgen. Mit einem Spann-Element kann ein Band oder auch mehrere Bänder gespannt, fixiert oder befestigt sein.

## Patentansprüche

1. Gelenk zur Verbindung zueinander beweglicher Bauteile (T1, T2) an jeweiligen Längsseiten (L1, L2) mit zumindest zwei zusammenwirkenden Gelenk-Bändern (11, 12; 33, 33a, 33b; 34, 34a, 34b), die mit ihren ersten Enden (E1) jeweils an zueinander entgegengesetzt orientierten Seiten des ersten Bauteils (T1) und mit ihren zweiten Enden (E2) jeweils an zueinander entgegengesetzt sowie entgegengesetzt zu den jeweiligen Seiten des ersten Bauteils orientierten Seiten des zweiten Bauteils (T2) befestigt sind, **dadurch gekennzeichnet, dass** zwischen den einander zugewandten Seiten der Bauteile zumindest ein Druck-Element (16, 15) angeordnet ist, welches durch eine Spannung der Gelenkbänder zwischen den Bauteilen gehalten wird.

2. Gelenk zur Verbindung zueinander beweglicher Bauteile (T1, T2) an jeweiligen Längsseiten (L1, L2) nach Anspruch 1, **dadurch gekennzeichnet, dass** auf einer zumindest einem Bauteil (T1, T2) zugewandten Seite des Druck-Elements (16, 15) zwischen diesem und dem jeweiligen Bauteil ein Auflage-Element (16, 17) angeordnet ist.

3. Gelenk zur Verbindung zueinander beweglicher Bauteile (T1, T2) an jeweiligen Längsseiten (L1, L2) nach Anspruch 1 oder 2, **dadurch gekennzeichnet, dass** die Bänder (11, 12; 33, 33a, 33b; 34, 34a, 34b) in ihrer Längs-Richtung in einem Winkel β zur Achsen-Richtung (R2) des Gelenks entgegengesetzt zueinander verlaufen, wobei der Winkel β ungleich 90 Grad beträgt.

4. Gelenk zur Verbindung zueinander beweglicher Bauteile (T1, T2) an jeweiligen Längsseiten (L1, L2) nach Anspruch 2 oder 3, **dadurch gekennzeichnet, dass** das Auflage-Element (16, 17) eine Gleitschicht aufweist, die an einer Oberfläche des Auflage-Elements gelegen ist, die einem der Bauteile (T1, T2) zugewandt ist.

5. Gelenk zur Verbindung zueinander beweglicher Bauteile (T1, T2) an jeweiligen Längsseiten (L1, L2) nach Anspruch 2, 3 oder 4, **dadurch gekennzeichnet, dass** die einem Bauteil (T1) zugewandte Seite des Auflage-Elements (16, 17) einen größeren Krümmungsradius aufweist als die Oberfläche desselben Bauteils (T1).

6. Gelenk zur Verbindung zueinander beweglicher Bauteile (T1, T2) an jeweiligen Längsseiten (L1, L2) nach einem der Ansprüche 1 bis 5, **dadurch gekennzeichnet, dass** die Bänder (11, 12; 33, 33a, 33b; 34, 34a, 34b) mittels eines Spann-Elements (50, 52) zumindest an einem Bauteil (T2) befestigt sind.

7. Gelenk zur Verbindung zueinander beweglicher Bauteile (T1, T2) an jeweiligen Längsseiten (L1, L2) nach einem der voranstehenden Ansprüche, **dadurch gekennzeichnet, dass** das Band (11, 12; 33, 33a, 33b; 34, 34a, 34b) aus zumindest zwei Lagen eines Faserverbund-Werkstoffs oder eines anderen Kunststoffs oder eines textilen Materials gebildet ist.

## Claims

1. Joint for connecting mutually displaceable components (T1, T2) on respective longitudinal sides (L1, L2), with at least two co-operating joint belts (11, 12; 33, 33a, 33b; 34, 34a, 34b), which are secured respectively by their first ends (E1) to sides of the first component (T1) oriented opposite one another and by their second ends (E2) respectively to sides of the second component (T2) oriented opposite one another and opposite the sides of the first component, **characterised in that** at least one pressure element (16, 15) is disposed between the mutually facing sides of the components, which are retained by a clamping arrangement of the joint belts between the components.

2. Joint for connecting mutually displaceable components (T1, T2) on respective longitudinal sides (L1, L2) as claimed in claim 1, **characterised in that** a bearing element (16, 17) is disposed on a side of the pressure element (16, 15) facing at least one component (T1, T2) between the former and the respective component.

3. Joint for connecting mutually displaceable components (T1, T2) on respective longitudinal sides (L1, L2) as claimed in claim 1 or 2, **characterised in that** the belts (11, 12; 33, 33a, 33b; 34, 34a, 34b) extend opposite one another in their longitudinal direction at an angle β with respect to the axial direction (R2) of the joint and the angle β is not 90 degrees.

4. Joint for connecting mutually displaceable components (T1, T2) on respective longitudinal sides (L1, L2) as claimed in claim 2 or 3, **characterised in that** the bearing element (16, 17) has an anti-friction layer which is applied to a surface of the bearing element facing one of the components (T1, T2).

5. Joint for connecting mutually displaceable components (T1, T2) on respective longitudinal sides (L1, L2) as claimed in claim 2, 3 or 4, **characterised in that** the side of the bearing element (16, 17) facing a component (T1) has a bigger radius of curvature than the surface of said component (T1).

6. Joint for connecting mutually displaceable components (T1, T2) on respective longitudinal sides (L1, L2) as claimed in one of claims 1 to 5, **characterised in that** the belts (11, 12; 33, 33a, 33b; 34, 34a, 34b) are secured to at least one component (T2) by means of a clamping element (50, 52).

7. Joint for connecting mutually displaceable components (T1, T2) on respective longitudinal sides (L1, L2) as claimed in one of the preceding claims, **characterised in that** the belt (11, 12; 33, 33a, 33b; 34, 34a, 34b) is made from at least two layers of a composite fibre material or another synthetic material or a textile material.

## Revendications

1. Articulation conçue pour relier des composants (T1, T2) mobiles l'un par rapport à l'autre le long de leurs côtés longitudinaux respectifs (L1, L2) par au moins deux bandes d'articulation (11, 12 ; 33, 33a, 33b ; 34, 34a, 34b) ayant leurs premières extrémités (E1) fixées aux côtés opposés l'un à l'autre du premier composant (T1) et leurs secondes extrémités (E2) fixées aux côtés opposés l'un à l'autre du second composant (T2), et qui sont également opposés aux côtés précédents, **caractérisée en ce qu'**entre les côtés en regard des composants est monté un élément de pression (16, 15) qui est maintenu entre les composants par la tension des bandes d'articulation.

2. Articulation conçue pour relier des composants (T1, T2) mobiles l'un par rapport à l'autre le long de leurs côtés longitudinaux respectifs (L1, L2) selon la revendication 1, **caractérisée en ce que** sur un côté de l'élément de pression (16, 15) en regard d'au moins un composant (T1, T2), est monté entre cet élément de pression et le composant concerné un élément d'appui (16, 17).

3. Articulation conçue pour relier des composants (T1, T2) mobiles l'un par rapport à l'autre le long de leurs côtés longitudinaux respectifs (L1, L2) selon la revendication 1 ou 2, **caractérisée en ce que** les bandes d'articulation (11, 12 ; 33, 33a, 33b ; 34, 34a, 34b) font chacune, en direction longitudinale, un angle β par rapport à la direction de l'axe (R2) de l'articulation, ces angles étant respectivement orientés à l'opposé les uns des autres, l'angle β étant différent de 90°.

4. Articulation conçue pour relier des composants (T1, T2) mobiles l'un par rapport à l'autre le long de leurs côtés longitudinaux respectifs (L1, L2) selon la revendication 2 ou 3, **caractérisée en ce que** l'élément d'appui (16, 17) présente en surface une couche de glissement en regard d'un des composants (T1, T2).

5. Articulation conçue pour relier des composants (T1, T2) mobiles l'un par rapport à l'autre sur leurs côtés longitudinaux respectifs (L1, L2) selon la revendication 2, 3 ou 3, **caractérisée en ce que** le côté de l'élément d'appui (16, 17) en regard d'un composant (T1) présente un rayon de courbure supérieur à celui qui présente la surface de ce même composant (T1).

6. Articulation conçue pour relier des composants (T1, T2) mobiles l'un par rapport à l'autre le long de leurs côtés longitudinaux respectifs (L1, L2) selon une des revendications 1 à 5, **caractérisée en ce que** les bandes (11, 12 ; 33, 33a, 33b ; 34, 34a, 34b) sont fixées chacune par un élément de tension (50, 52) au moins à un composant (T2).

7. Articulation conçue pour relier des composants (T1, T2) mobiles l'un par rapport à l'autre le long de leurs côtés longitudinaux respectifs (L1, L2) selon une des revendications précédentes, **caractérisée en ce que** la bande (11, 12 ; 33, 33a, 33b ; 34, 34a, 34b) est constituée d'au moins deux couches d'un matériau renforcé par des fibres ou d'une autre matière plastique ou d'un matériau textile.
